# EUROPEAN PATENT APPLICATION

(11) **EP 4 763 603 A1**
(43) Date of publication of application: **24.06.2026**
(21) Application number: 24864412.2
(22) Date of filing: 21.08.2024
(51) Int. Cl.: B60N 2/02

(54) **SEAT ADJUSTMENT METHOD AND VEHICLE**

(30) Priority: 11.09.2023 CN 202311170407
(71) Applicant: Yinwang Intelligent Technologies Co., Ltd., Shenzhen, Guangdong 518110 (CN)
(72) Inventor: CHEN, Xiubo, Shenzhen, Guangdong 518129 (CN)
(74) Representative: Körber, Martin Hans
(86) International application number: PCT/CN2024/113710
(87) International publication number: WO 2025/055689

(57) **Abstract**

A seat adjustment method and a transportation means are provided, which relate to the field of artificial intelligence technologies, to ensure comfort of a second user on a front-row seat, and also consider riding experience of a first user on a rear-row seat. In the seat adjustment method, first seat information of a first seat is first obtained; when the first seat information indicates that there is the first user on the first seat, an adjustment limitation condition corresponding to an adjustable item of a second seat is obtained, where the adjustment limitation condition is used to limit an adjustment range of the adjustable item, the first seat and the second seat face a same direction, the second seat is located in a row in front of the first seat, and the second seat corresponds to at least one adjustable item; and when the second user adjusts the adjustable item of the second seat, an adjustment operation of the second user is limited based on the adjustment limitation condition corresponding to the adjustable item.

## Description

This application claims priority to Chinese Patent Application No. 202311170407.4, filed with the China National Intellectual Property Administration on September 11, 2023 and entitled "SEAT ADJUSTMENT METHOD AND TRANSPORTATION MEANS", which is incorporated herein by reference in its entirety.

### TECHNICAL FIELD

This application relates to the field of artificial intelligence technologies, and in particular, to a seat adjustment method and a transportation means.

### BACKGROUND

Currently, to ensure comfort of a user when the user takes a transportation means like a car, a bus, a high-speed railway, or an airplane, comfort of a seat may be usually adjusted. There are many manners of adjusting the comfort of the seat, for example, providing a seat with a comfortable style, or providing a seat with a flexible adjustment function (for example, an adjustable backrest, ventilation and heating, or a massage function).

However, some seat adjustment functions such as a seat spacing adjustment function and a seat backrest angle adjustment function improve riding experience, comfort, and the like of a passenger on the seat, but reduce riding space of a rear-row passenger. In this case, although riding experience of a front-row passenger can be improved, riding experience of the rear-row passenger is affected.

### SUMMARY

This application provides a seat adjustment method and a transportation means, to ensure comfort of a second user on a front-row seat, and also consider riding experience of a first user on a rear-row seat.

To achieve the foregoing objective, this application uses the following technical solutions.

According to a first aspect, a seat adjustment method is provided, applied to a transportation means, where the transportation means includes at least a first seat and a second seat that face a same direction, the second seat is located in a row in front of the first seat, and the second seat corresponds to at least one adjustable item.

The method includes: The transportation means obtains first seat information of a first seat; when the first seat information indicates that there is a first user on the first seat, the transportation means obtains an adjustment limitation condition corresponding to the adjustable item of the second seat, where the adjustment limitation condition is used to limit an adjustment range of the adjustable item; and the transportation means limits, based on the adjustment limitation condition corresponding to the adjustable item, an adjustment operation of a second user when the second user adjusts the adjustable item of the second seat.

In the foregoing method, adjustment of the front-row seat may be limited based on a status of the first user sitting on the rear-row seat, to reduce impact of the adjustment of the front-row seat on the first user on the rear-row seat. When comfort of the second user on the front-row seat is ensured, riding experience of the first user on the rear-row seat may also be considered.

In an implementation of the first aspect, the first seat information includes a pressure value corresponding to the first seat; and when the pressure value corresponding to the first seat is greater than or equal to a first pressure value, the first seat information indicates that there is the first user on the first seat; or when the pressure value corresponding to the first seat is less than the first pressure value, the first seat information indicates that there is no user on the first seat.

In this implementation, the pressure value corresponding to the first seat may reflect whether the first seat is seated and a weight of the first user sitting on the first seat. When the pressure value corresponding to the first seat is greater than or equal to the first pressure value, the first seat information may indicate that there is the first user on the first seat. When the pressure value corresponding to the first seat is less than the first pressure value, the first seat information may indicate that there is no user on the first seat, or impact of adjustment of the second seat on the existing first user (for example, a young child sitting on the first seat) may not be considered.

In a possible implementation of the first aspect, the adjustable item includes a backrest angle of the second seat, and the adjustment limitation condition includes an angle range for limiting adjustment of the backrest angle of the second seat. When the pressure value corresponding to the first seat is greater than or equal to the first pressure value and less than a second pressure value, the transportation means obtains a first angle range corresponding to the backrest angle of the second seat. When the pressure value corresponding to the first seat is greater than or equal to the second pressure value and less than a third pressure value, the transportation means obtains a second angle range corresponding to the backrest angle of the second seat, where the first angle range is greater than the second angle range.

In this implementation, when the pressure value corresponding to the first seat is in different ranges, the transportation means has different limitations on the backrest angle of the second seat. In this way, physical conditions such as a weight and fatness of a rear-row user can be fully considered, and impact on the rear-row user when a front-row user adjusts a seat is reduced.

In a possible implementation of the first aspect, the adjustable item includes a position of the second seat, and the adjustment limitation condition includes a distance range for limiting adjustment of the position of the second seat. When the pressure value corresponding to the first seat is greater than or equal to the first pressure value and less than a fourth pressure value, the transportation means obtains a first distance range corresponding to the position of the second seat. When the pressure value corresponding to the first seat is greater than or equal to the fourth pressure value and less than a fifth pressure value, the transportation means obtains a second distance range corresponding to the position of the second seat, where the first distance range is greater than the second distance range.

In this implementation, when the pressure value corresponding to the first seat is in different ranges, the transportation means has different limitations on the position of the second seat. In this way, physical conditions such as a weight and fatness of a rear-row user can be fully considered, and impact on the rear-row user when a front-row user adjusts a seat is reduced.

In an implementation of the first aspect, the first seat information includes a first image corresponding to the first seat, and the first image indicates that there is the first user on the first seat.

In this implementation, the content included in the first image may reflect whether the first seat is seated and a volume of space occupied by the first user sitting on the first seat.

In a possible implementation of the first aspect, the adjustable item includes a backrest angle of the second seat, and the adjustment limitation condition includes an angle range for limiting adjustment of the backrest angle of the second seat. The transportation means obtains user information of the first user in the first image, and determines, based on the user information, a volume of space occupied by the first user. When the volume of the space occupied by the first user is greater than or equal to a first preset value and less than a second preset value, the transportation means obtains a third angle range corresponding to the backrest angle of the second seat. When the volume of the space occupied by the first user is greater than or equal to the second preset value and less than a third preset value, the transportation means obtains a fourth angle range corresponding to the backrest angle of the second seat, where the third angle range is greater than the fourth angle range.

In this implementation, when the volume of the space occupied by the first user is in different ranges, the transportation means has different limitations on the backrest angle of the second seat. In this way, physical conditions such as a volume and fatness of a rear-row user can be fully considered, and impact on the rear-row user when a front-row user adjusts a seat is reduced.

In a possible implementation of the first aspect, the adjustable item includes a position of the second seat, and the adjustment limitation condition includes a distance range for limiting adjustment of the position of the second seat. The transportation means obtains the user information of the first user in the first image, and determines, based on the user information, the volume of the space occupied by the first user. When the volume of the space occupied by the first user is greater than or equal to the first preset value and less than a fourth preset value, the transportation means obtains a third distance range corresponding to the position of the second seat. When the volume of the space occupied by the first user is greater than or equal to the fourth preset value and less than a fifth preset value, the transportation means obtains a fourth distance range corresponding to the position of the second seat, where the third distance range is greater than the fourth distance range.

In this implementation, when the volume of the space occupied by the first user is in different ranges, the transportation means has different limitations on the position of the second seat. In this way, physical conditions such as a volume and fatness of a rear-row user can be fully considered, and impact on the rear-row user when a front-row user adjusts a seat is reduced.

In an implementation of the first aspect, if the backrest angle of the second seat exceeds an angle range corresponding to the backrest angle of the second seat after the second user adjusts the backrest angle of the second seat, the transportation means controls the backrest angle of the second seat to be adjusted to an angle corresponding to a maximum value of the angle range.

In an implementation of the first aspect, if the position of the first seat exceed the distance range corresponding to the position of the second seat after the second user adjusts the position of the second seat, the transportation means controls the position of the second seat to be adjusted to a position corresponding to a maximum value of the distance range.

In the foregoing two implementations, adjustment of the front-row seat may be limited based on a status of the first user sitting on the rear-row seat, to reduce impact of the adjustment of the front-row seat on the first user on the rear-row seat. When comfort of the second user on the front-row seat is ensured, riding experience of the first user on the rear-row seat may also be considered.

In an implementation of the first aspect, the first seat information includes safety belt wearing information corresponding to the first seat; and when the safety belt wearing information corresponding to the first seat indicates that a safety belt of the first seat is worn, the first seat information indicates that there is the first user on the first seat; or when the safety belt wearing information corresponding to the first seat indicates that the safety belt of the first seat is not worn, the first seat information indicates that there is no user on the first seat.

In this implementation, the safety belt wearing information corresponding to the first seat may reflect whether the first seat is seated. In addition, in addition to determining whether there is a user on a seat, the safety belt wearing information may further restrict the user to use the safety belt more actively. This is because in some possible application scenarios, if there is a user actually on the rear-row seat, but the user does not use a safety belt, the transportation means may determine that there is no user on the rear-row seat, thereby not limiting adjustment of the front-row seat. If the rear-row user wants to avoid this case, the rear-row user actively uses the safety belt, so that the transportation means determines that there is a user on the rear-row seat, and limits adjustment of the front-row seat. In this way, not only the rear-row user can take a ride more comfortably, but also safety of travel can be improved.

In an implementation of the first aspect, when the first seat information indicates that there is no user sitting on the first seat, if the second user adjusts the adjustable item of the second seat, the transportation means controls, based on the adjustment operation of the second user, the adjustable item to be adjusted to a corresponding angle or position.

In this implementation, when the first seat information indicates that there is no user sitting on the first seat, it indicates that the adjustment of the adjustable item of the second seat may not affect another user. In this case, if the second user adjusts the adjustable item of the second seat, the transportation means may control, based on the adjustment operation of the second user, the adjustable item to be adjusted to a corresponding angle or position. In other words, the transportation means does not limit the adjustment operation of the second user on the second seat, and therefore, comfort of the second user taking the transportation means is improved, and riding experience of the second user is ensured.

According to a second aspect, a transportation means is provided. The transportation means includes at least a first seat and a second seat that face a same direction, and a control unit separately connected to the first seat and the second seat. The second seat is located in a row in front of the first seat, and the second seat corresponds to at least one adjustable item. The control unit is configured to: obtain first seat information of a first seat; when the first seat information indicates that there is a first user on the first seat, obtain an adjustment limitation condition corresponding to the adjustable item of the second seat, where the adjustment limitation condition is used to limit an adjustment range of the adjustable item; and limit, based on the adjustment limitation condition corresponding to the adjustable item, an adjustment operation of a second user when the second user adjusts the adjustable item of the second seat.

In a possible implementation of the second aspect, the first seat includes a pressure sensor, the pressure sensor is connected to the control unit, and the first seat information includes a pressure value corresponding to the first seat. The pressure sensor is configured to: obtain the pressure value corresponding to the first seat, and send the pressure value corresponding to the first seat to the control unit. The control unit is further configured to: when the pressure value corresponding to the first seat is greater than or equal to a first pressure value, determine that the first seat information indicates that there is the first user on the first seat; or when the pressure value corresponding to the first seat is less than the first pressure value, determine that the first seat information indicates that there is no user on the first seat.

In a possible implementation of the second aspect, the adjustable item includes a backrest angle of the second seat, the adjustment limitation condition includes an angle range for limiting adjustment of the backrest angle of the second seat. The control unit is further configured to: when the pressure value corresponding to the first seat is greater than or equal to the first pressure value and less than a second pressure value, obtain a first angle range corresponding to the backrest angle of the second seat; and when the pressure value corresponding to the first seat is greater than or equal to the second pressure value and less than a third pressure value, obtain a second angle range corresponding to the backrest angle of the second seat, where the first angle range is greater than the second angle range.

In a possible implementation of the second aspect, the adjustable item includes a position of the second seat, and the adjustment limitation condition includes a distance range for limiting adjustment of the position of the second seat. The control unit is further configured to: when the pressure value corresponding to the first seat is greater than or equal to the first pressure value and less than a fourth pressure value, obtain a first distance range corresponding to the position of the second seat; and when the pressure value corresponding to the first seat is greater than or equal to the fourth pressure value and less than a fifth pressure value, obtain a second distance range corresponding to the position of the second seat, where the first distance range is greater than the second distance range.

In an implementation of the second aspect, the transportation means further includes at least one camera, and the first seat information includes a first image corresponding to the first seat. The camera is configured to: obtain the first image corresponding to the first seat, and send the first image to the control unit. The control unit is further configured to determine, based on the first image, the first user existing on the first seat.

In a possible implementation of the second aspect, the adjustable item includes a backrest angle of the second seat, the adjustment limitation condition includes an angle range for limiting adjustment of the backrest angle of the second seat. The control unit is further configured to: obtain user information of the first user in the first image, and determine, based on the user information, a volume of space occupied by the first user; when the volume of the space occupied by the first user is greater than or equal to a first preset value and less than a second preset value, obtain a third angle range corresponding to the backrest angle of the second seat; and when the volume of the space occupied by the first user is greater than or equal to the second preset value and less than a third preset value, obtain a fourth angle range corresponding to the backrest angle of the second seat, where the third angle range is greater than the fourth angle range.

In a possible implementation of the second aspect, the adjustable item includes a position of the second seat, and the adjustment limitation condition includes a distance range for limiting adjustment of the position of the second seat. The control unit is further configured to: obtain the user information of the first user in the first image, and determine, based on the user information, the volume of the space occupied by the first user; when the volume of the space occupied by the first user is greater than or equal to the first preset value and less than a fourth preset value, obtain a third distance range corresponding to the position of the second seat; and when the volume of the space occupied by the first user is greater than or equal to the fourth preset value and less than a fifth preset value, obtain a fourth distance range corresponding to the position of the second seat, where the third distance range is greater than the fourth distance range.

In an implementation of the second aspect, the control unit is further configured to: if the backrest angle of the second seat exceeds an angle range corresponding to the backrest angle of the second seat after the second user adjusts the backrest angle of the second seat, control the backrest angle of the second seat to be adjusted to an angle corresponding to a maximum value of the angle range.

In an implementation of the second aspect, the control unit is further configured to: if the position of the second seat exceeds a distance range corresponding to the position of the second seat after the second user adjusts the position of the second seat, control the position of the second seat to be adjusted to a position corresponding to a maximum value of the distance range.

In a possible implementation of the second aspect, the first seat includes a safety belt detection unit, the safety belt detection unit is connected to the control unit, and the first seat information includes safety belt wearing information corresponding to the first seat. The safety belt detection unit is configured to: obtain the safety belt wearing information corresponding to the first seat, and send the safety belt wearing information to the control unit. The control unit is further configured to: when the safety belt wearing information corresponding to the first seat indicates that the safety belt of the first seat is worn, determine that the first seat information indicates that there is the first user on the first seat; or when the safety belt wearing information corresponding to the first seat indicates that the safety belt of the first seat is not worn, determine that the first seat information indicates that there is no user sitting on the first seat.

In an implementation of the second aspect, the control unit is further configured to: when the first seat information indicates that there is no user siting on the first seat, if the second user adjusts the adjustable item of the second seat, control, based on the adjustment operation of the second user, the adjustable item to be adjusted to a corresponding angle or position.

According to a third aspect, a transportation means is provided, and includes a memory and one or more processors. The memory is coupled to the processor. The memory stores computer program code. The computer program code includes computer instructions. When the computer instructions are executed by the processor, the transportation means is enabled to perform the seat adjustment method according to any one of the first aspect or the implementations of the first aspect.

According to a fourth aspect, a computer-readable storage medium is provided, including computer instructions. When the computer instructions are run on a transportation means, the transportation means is enabled to perform the seat adjustment method according to any one of the first aspect and the implementations of the first aspect.

According to a fifth aspect, a computer program product is provided. When the computer program product runs on a transportation means, the transportation means is enabled to perform the seat adjustment method according to any one of the first aspect and the implementations of the first aspect.

It may be understood that for beneficial effect that can be achieved by the transportation means according to the second aspect and the third aspect, the computer-readable storage medium according to the fourth aspect, and the computer program product according to the fifth aspect, refer to the beneficial effect in any one of the first aspect and the possible design manners of the first aspect. Details are not described herein again.

### BRIEF DESCRIPTION OF DRAWINGS

FIG. 1 is a diagram 1 of a structure of a transportation means according to an embodiment of this application;
FIG. 2 is a diagram 2 of a structure of a transportation means according to an embodiment of this application;
FIG. 3 is a diagram 3 of a structure of a transportation means according to an embodiment of this application;
FIG. 4 is a diagram 4 of a structure of a transportation means according to an embodiment of this application;
FIG. 5 is a schematic flowchart 1 of a seat adjustment method according to an embodiment of this application;
FIG. 6 is a diagram of a first image according to an embodiment of this application;
FIG. 7 is a diagram of adjusting a seat backrest angle according to an embodiment of this application;
FIG. 8 is a diagram of adjusting a seat position according to an embodiment of this application;
FIG. 9 is a schematic flowchart 2 of a seat adjustment method according to an embodiment of this application;
FIG. 10 is a schematic flowchart 3 of a seat adjustment method according to an embodiment of this application; and
FIG. 11 is a diagram 5 of a structure of a transportation means according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, service scenarios described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with emergence of new service scenarios.

A seat is a facility that a user needs to touch for a long time when taking a transportation means, and therefore, comfort of the seat affects user experience. Currently, to ensure that the user has better experience when taking a transportation means like a vehicle, a high-speed railway, or an airplane, comfort of a seat may be usually adjusted. There are many manners of adjusting the comfort of the seat, for example, providing a seat with a comfortable style, or providing a seat with a flexible adjustment function (for example, an adjustable backrest, ventilation and heating, or a massage function).

However, for providing a seat with a flexible adjustment function, function adjustment of each seat is completely independent. For example, seat spacing adjustment, seat backrest angle adjustment, or the like is performed only for a current seat. In this case, although riding experience, comfort, and the like of a passenger on the current seat are improved, riding space of a rear-row passenger is reduced, inconvenience is caused to the rear-row passenger, or the like. It can be learned that, a current seat adjustment manner can improve riding experience of a front-row passenger, but affect riding experience of a rear-row passenger.

Based on the foregoing content, an embodiment of this application provides a seat adjustment method. In the method, in a first seat and a second seat that face a same direction, the second seat is adjusted, where the second seat is located in a row in front of the first seat, and the second seat corresponds to at least one adjustable item. In the method, first seat information of the first seat is first obtained, and an adjustment limitation condition corresponding to the adjustable item of the second seat is obtained when the first seat information indicates that there is a first user on the first seat, where the adjustment limitation condition is used to limit an adjustment range of the adjustable item; and when the second user adjusts the adjustable item of the second seat, an adjustment operation of a second user is limited based on the adjustment limitation condition corresponding to the adjustable item.

In the foregoing method, adjustment of a front-row seat may be limited based on a status of the first user sitting on a rear-row seat, to reduce impact of the adjustment of the front-row seat on the first user on the rear-row seat. When comfort of the second user on the front-row seat is ensured, riding experience of the first user on the rear-row seat may also be considered.

The seat adjustment method in this embodiment of this application may be applied to a transportation means including at least two vertically-arranged adjustable seats, for example, a car, a bus, a high-speed railway, or an airplane. Orientations of the vertically-arranged adjustable seats are also the same.

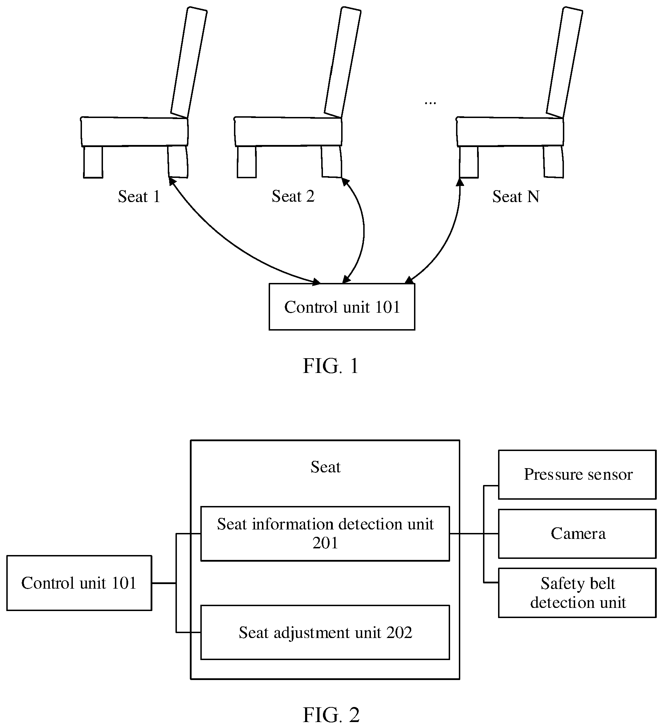

As shown in FIG. 1, the transportation means may include a seat 1, a seat 2, ..., a seat N, and a control unit 101 connected to each seat. The seat 1 to the seat N are vertically arranged and face a same direction. The control unit 101 may obtain seat information of each seat, determine, based on seat information of a rear-row seat, whether there is a first user siting on the rear-row seat, and determine an adjustment limitation condition for an adjustable item of a front-row seat when there is a user sitting on the rear-row seat. When a second user adjusts a specific adjustable item of the front-row seat, the control unit 101 may limit, based on an adjustment limitation condition corresponding to the adjustable item, an adjustment operation of the second user.

The seat information may include a pressure value corresponding to the seat, an image corresponding to the seat, safety belt wearing information corresponding to the seat, and the like. In some possible application scenarios, the control unit 101 may determine, based on the pressure value corresponding to the seat, whether there is a user on the seat. For example, when the pressure value is greater than or equal to a first pressure value, it is determined that there is a user; or when the pressure value is less than a first pressure value, it is determined that there is no user. Alternatively, the control unit 101 may determine, based on the image corresponding to the seat, whether there is a user on the seat. For example, content in the image is identified. When the image includes a user, it is determined that there is a user; or when the image does not include a user, it is determined that there is no user. Alternatively, the control unit 101 may further determine, based on the safety belt wearing information, whether there is a user on the seat. For example, when the safety belt wearing information indicates that a safety belt of the seat is worn, it is determined that there is a user; or when the safety belt wearing information indicates that a safety belt of the seat is not worn, it is determined that there is no user.

In some other possible application scenarios, the control unit 101 may further determine, based on any two or all of the pressure value, the image, and the safety belt wearing information that correspond to the seat, whether there is a user on the seat. For example, when the safety belt wearing information indicates that the safety belt of the seat is not worn, whether there is a user is further determined based on the pressure value or the image corresponding to the seat. Alternatively, when the image corresponding to the seat includes a user, it is further determined, based on the pressure value corresponding to the seat, whether there is a user (the user herein is a user that can affect an adjustment range of the second seat).

The seat adjustable item may include a seat position, a seat backrest angle, and the like, and an adjustment limitation condition of the adjustable item is used to limit an adjustment range of the adjustable item. When there is a user on the rear-row seat, the control unit 101 may obtain an adjustment limitation condition corresponding to the seat position, for example, obtain a limitation distance range between the front-row seat and the rear-row seat. Alternatively, the control unit 101 may obtain an adjustment limitation condition corresponding to the seat backrest angle, for example, obtain a limitation angle range of a front-row seat backrest. Alternatively, the control unit 101 may obtain both the adjustment limitation condition corresponding to the seat position and the adjustment limitation condition corresponding to the seat backrest angle.

For example, in FIG. 1, the seat 1 is a front-row seat, and the seat 2 is a rear-row seat. The control unit 101 determines, based on seat information of the seat 2, whether there is the first user on the seat 2. If there is the first user on the seat 2, an adjustment limitation condition for limiting adjustment of the seat 1 is obtained. When the second user adjusts a backrest angle of the seat 1, the control unit 101 may limit, based on an adjustment limitation condition of the backrest angle of the seat 1, the backrest angle of the seat 1 that is adjusted by the second user to be within a specific angle range. When the second user adjusts a position of the seat 1, the control unit 101 may limit, based on an adjustment limitation condition of the position of the seat 1, the second user to adjust the position of the seat 1, to limit a position adjustment range of the seat 1 to be within a specific distance range. In this way, when comfort of the second user corresponding to the seat 1 is ensured, specific space is also reserved for the first user on the seat 2, to ensure riding experience of the first user on the seat 2.

In some possible application scenarios, the transportation means may further include one or more of a pressure sensor, a camera, a safety belt detection unit, an infrared sensor, and the like. A pressure sensor may be disposed on each seat. The pressure sensor may detect a pressure value borne by the seat, and send the pressure value corresponding to the seat to the control unit 101, so that the control unit 101 determines, based on the pressure value corresponding to the seat, whether there is a user on a rear-row seat.

A plurality of cameras may be disposed in a compartment of the transportation means. Each camera may obtain seat images of a plurality of different seats, and send the seat images to the control unit 101, so that the control unit 101 determines, based on the seat images, whether there is a user on a rear-row seat. Alternatively, a camera may be disposed for each seat in a compartment of the transportation means. Each camera correspondingly obtains a seat image of one seat, and sends the seat image to the control unit 101, so that the control unit 101 determines, based on the seat image, whether there is a user on a rear-row seat.

A safety belt detection unit may be further disposed on each seat. Each safety belt detection unit may detect a wearing status of a safety belt on the seat, and send the wearing status of the safety belt to the control unit 101 in a form of safety belt wearing information, so that the control unit 101 determines, based on the safety belt wearing information, whether there is a user on a rear-row seat.

An infrared sensor may be further disposed on each seat, and each infrared sensor may detect whether there is a user on a rear-row seat.

In some possible application scenarios, the control unit 101 may perform stepped limitation on an adjustment range of the adjustable item of the front-row seat based on a weight, an occupied space volume, and the like of a user on the rear-row seat.

For example, when there is a user on the rear-row seat, it is further determined whether the pressure value corresponding to the rear-row seat is less than a second pressure value when the pressure value is greater than or equal to the first pressure value. If the pressure value corresponding to the rear-row seat is less than the second pressure value, the adjustable item of the front-row seat may be limited by a first gradient, to be specific, a first angle range corresponding to a backrest angle of the front-row seat is obtained, or a first distance range corresponding to a position of the front-row seat is obtained. If the pressure value corresponding to the rear-row seat is greater than or equal to the second pressure value, it may be further determined whether the pressure value corresponding to the rear-row seat is less than a third pressure value. If the pressure value corresponding to the rear-row seat is less than the third pressure value, the adjustable item of the front-row seat may be limited by a second gradient, to be specific, a second angle range corresponding to the backrest angle of the front-row seat is obtained, or a second distance range corresponding to the position of the front-row seat is obtained. That the first angle range is greater than the second angle range, and the first distance range is greater than the second distance range indicates that a limitation degree of the first gradient is less than a limitation degree of the second gradient.

In addition, when the pressure value of the rear-row seat is greater than or equal to the third pressure value, the adjustable item of the front-row seat may be limited by a third gradient. For example, the backrest angle or the position of the front-row seat is prohibited from being adjusted. Therefore, when a weight of the user on the rear-row seat is large, comfort of the user on the rear-row seat is ensured.

For another example, when there is a user on the rear-row seat, a volume of space occupied by the user is further determined based on an image corresponding to the rear-row seat. When the volume of the space occupied by the user is greater than or equal to a first preset value and less than a second preset value, the adjustable item of the front-row seat may be limited by a first gradient, to be specific, a third angle range corresponding to the backrest angle of the front-row seat is obtained, or a third distance range corresponding to the position of the front-row seat is obtained. If the volume of the space occupied by the user is greater than or equal to the second preset value and less than a third preset value, the adjustable item of the front-row seat may be limited by a second gradient, to be specific, a fourth angle range corresponding to the backrest angle of the front-row seat is obtained, or a fourth distance range corresponding to the position of the front-row seat is obtained. That the third angle range is greater than the fourth angle range, and the third distance range is greater than the fourth distance range indicates that a limitation degree of the first gradient is less than a limitation degree of the second gradient.

In addition, when the volume of the space occupied by the user on the rear-row seat is greater than or equal to the third preset value, the adjustable item of the front-row seat may be limited by a third gradient. For example, the backrest angle or the position of the front-row seat is prohibited from being adjusted. Therefore, when the user on the rear-row seat occupies large space, comfort of the user on the rear-row seat is ensured.

That the control unit 101 limits an adjustment operation of a user on the front-row seat may include: After the user on the front-row seats adjusts the backrest angle of the front-row seat, if the backrest angle of the front-row seats exceeds an angle range (for example, the first angle range, the second angle range, the third angle range, or the fourth angle range) corresponding to the backrest angle of the front-row seat, the backrest angle of the front-row seat is controlled to be adjusted to an angle corresponding to a maximum value of the angle range. After the user on the front-row seat adjusts the position of the front-row seat, if the position of the front-row seat exceeds a distance range (for example, the first distance range, the second distance range, the third distance range, or the fourth distance range) corresponding to the position of the front-row seat, the control unit 101 controls the position of the front-row seat to be adjusted to a position corresponding to a maximum value of the distance range. Therefore, the control unit 101 can limit adjustment of the front-row seat based on the angle range or the distance range, to avoid that the backrest angle of the front-row seat exceeds the limit and/or the position of the front-row seat exceeds the limit.

It may be understood that the "rear-row seat" may be any seat other than the seat 1 shown in FIG. 1. In addition, the front-row seat and the rear-row seat are relative. For example, the seat 2 is a rear-row seat relative to the seat 1, and is a front-row seat relative to the seat 3.

In some other possible application scenarios, as shown in FIG. 2, the transportation means may include a seat information detection unit 201, a control unit 101, a seat adjustment unit 202, and the like. In addition, the seat information detection unit 201 and the seat adjustment unit 202 are separately connected to the control unit 101.

The seat information detection unit 201 may include one or more of the pressure sensor, the camera, the safety belt detection unit, and the like in the foregoing embodiment. The seat information detection unit 201 may obtain seat information corresponding to each seat, such as a pressure value, an image, and safety belt wearing information, and sends the seat information to the control unit 101.

The control unit 101 determines, based on the received seat information, whether there is a user on the rear-row seat, determines an adjustment limitation condition corresponding to the adjustable item of the front-row seat when there is a user on the rear-row seat, and may send the adjustment limitation condition to the seat adjustment unit 202 of the front-row seat in a form of control instruction.

The seat adjustment unit 202 is disposed on each seat. In response to the received control instruction, when a user adjusts the adjustable item of the front-row seat, the seat adjustment unit 202 may limit an adjustment operation of the user based on the adjustment limitation condition. For example, the seat adjustment unit 202 may limit the user to adjust the backrest angle of the front-row seat, limit the user to adjust the position of the front-row seat, and the like.

For example, the control unit 101 may be a low-cost microcontroller unit (microcontroller unit, MCU), and is connected to the seat information detection unit 201 and the seat adjustment unit 202 through an interface like CAN/RS485, to obtain the seat information from the seat detection unit 201, and send the adjustment limitation condition to the seat adjustment unit 202. Alternatively, the control unit 101 may be a control component of another type. This is not specifically limited in embodiments of this application.

In addition, when there is no user sitting on the rear-row seat, the control unit 101 does not limit the adjustment operation of the user on the front-row seat. When the user on the front-row seat adjusts the adjustable item of the front-row seat, the control unit 101 may control, based on the adjustment operation of the user on the front-row seat, the adjustable item to be adjusted to a corresponding angle or position.

In some possible application scenarios, the control unit may be connected to the seat information detection unit and the seat adjustment unit by using a centralized architecture or a distributed architecture.

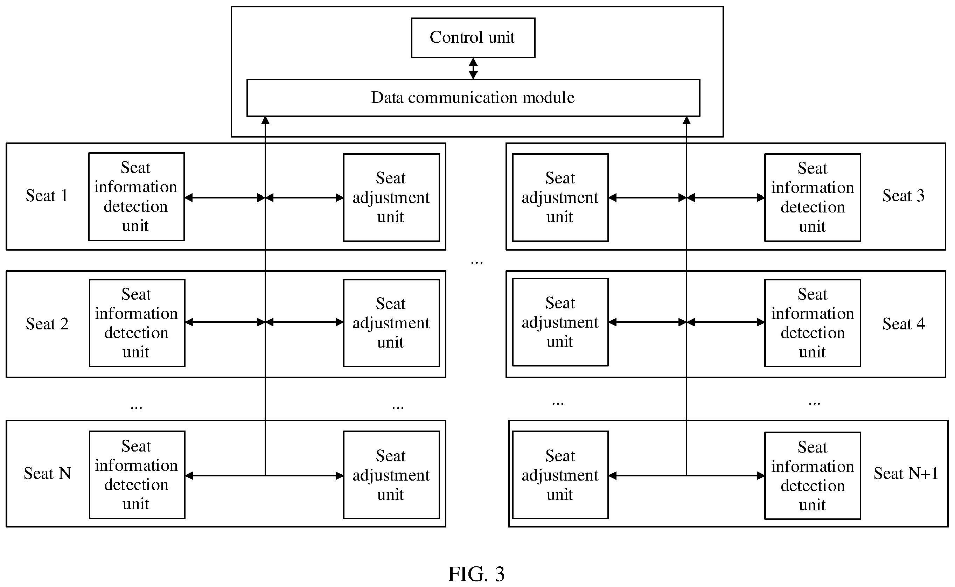

For example, as shown in FIG. 3, the control unit is connected to the seat information detection unit and the seat adjustment unit by using a centralized architecture. Further, only one control unit needs to be installed on the transportation means. For example, each seat (for example, a seat 1, a seat 2, a seat 3, a seat 4, ..., a seat N, and a seat N+1) on the transportation means includes one seat information detection unit and one seat adjustment unit, and the control unit is separately connected to a seat information detection unit and a seat adjustment unit of each seat.

The control unit receives seat information sent by each seat information detection unit, and determines, based on the seat information, whether there is a user on a corresponding seat. When there is a user on a seat, the control unit determines an adjustment limitation condition corresponding to an adjustable item of a front-row seat of the seat, and sends the adjustment limitation condition to a seat adjustment unit of the front-row seat in a form of control instruction. For example, when there is a user on the seat 2 in FIG. 3, the control unit may send a control instruction corresponding to an adjustment limitation condition to a seat adjustment unit of the front-row seat 1 of the seat 2.

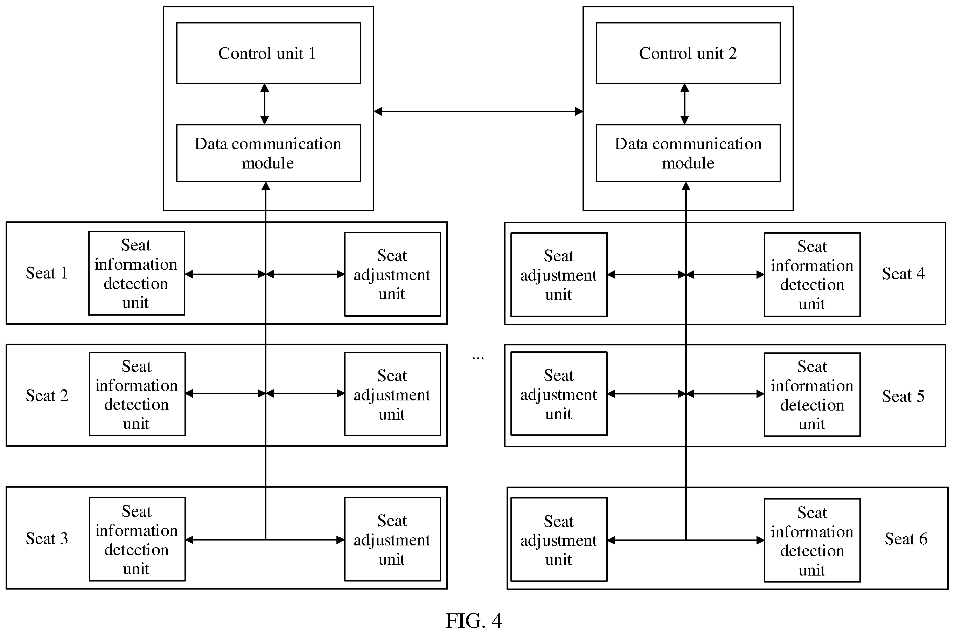

For another example, as shown in FIG. 4, the control unit is connected to the seat information detection unit and the seat adjustment unit by using a distributed architecture. Further, a plurality of control units may be installed on the transportation means, and the control units may communicate with each other. For example, each seat on the transportation means includes one seat information detection unit and one seat adjustment unit. Each control unit may be connected to seat information detection units and seat adjustment units of some seats. For example, in FIG. 4, the control unit 1 may be connected to the seat information detection units and the seat adjustment units of the seat 1, the seat 2, and the seat 3. The control unit 2 may be connected to the seat information detection units and the seat adjustment units of the seat 4, the seat 5, and the seat 6.

The control unit 1 receives seat information of the seat 1 sent by the seat information detection unit of the seat 1, receives seat information of the seat 2 sent by the seat information detection unit of the seat 2, and receives seat information of the seat 3 sent by the seat information detection unit of the seat 3. The control unit 1 determines, based on seat information, whether there is a user on a corresponding seat, and if there is a user on the corresponding seat, sends a control instruction corresponding to an adjustment limitation condition to a seat adjustment unit of a front-row seat of the seat. For example, if the control unit 1 determines, based on the seat information of the seat 2, that there is a user on the seat, the control unit 1 sends a control instruction corresponding to an adjustment limitation condition to the seat adjustment unit of the front-row seat 1 of the seat 2.

The control unit 2 receives the seat information of the seat 4 sent by the seat information detection unit of the seat 4, receives the seat information of the seat 5 sent by the seat information detection unit of the seat 5, and receives the seat information of the seat 6 sent by the seat information detection unit of the seat 6. The control unit 2 determines, based on seat information, whether there is a user on a corresponding seat, and if there is a user on the corresponding seat, sends a control instruction corresponding to an adjustment limitation condition to a seat adjustment unit of a front-row seat of the seat. For example, if the control unit 2 determines, based on the seat information of the seat 5, that there is a user on the seat, the control unit 2 sends a control instruction corresponding to an adjustment limitation condition to the seat adjustment unit of the front-row seat 4 of the seat 5.

In addition, if there is a user on the seat 4, the control unit 2 may also communicate with the control unit 1, and send an adjustment limitation condition of the front-row seat 3 of the seat 4 to the control unit 1. The control unit 1 may send a control instruction corresponding to the adjustment limitation condition to the seat adjustment unit of the seat 3.

For another example, regardless of the foregoing connection manner, the control unit may communicate with the seat information detection unit and the seat adjustment unit through a data communication module.

The foregoing seat adjustment method is applied to a transportation means. When taking the transportation means, a user may adjust, based on a requirement of the user, a backrest angle or a position of a currently taken seat. In this case, if there is another user sitting on a rear-row seat, adjustment performed by the user on the front-row seat on the seat of the user is limited. Therefore, when a requirement and comfort of the user on the front-row seat are met as much as possible, impact of the adjustment of the front-row seat on the user on the rear-row seat is also reduced.

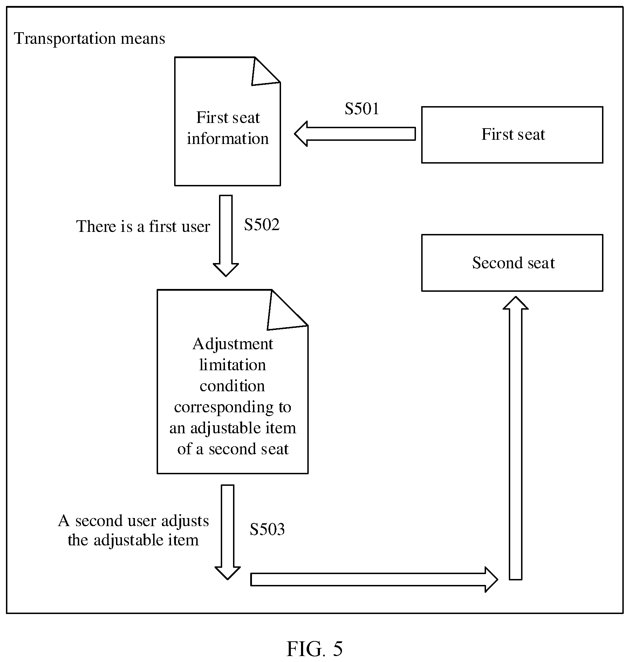

As shown in FIG. 5, the seat adjustment method may include the following steps S501 to S503.

S501: A transportation means obtains first seat information of a first seat.

The transportation means includes at least a first seat and a second seat, and the second seat is located in a row in front of the first seat. In addition, the first seat may be represented as a rear-row seat, and the second seat may be represented as a front-row seat.

In some embodiments, the first seat information includes one or more of a pressure value corresponding to the first seat, a first image corresponding to the first seat, and safety belt wearing information corresponding to the first seat.

For example, the transportation means may obtain, via a pressure sensor corresponding to the first seat, the pressure value corresponding to the first seat, obtain, via a camera corresponding to the first seat, the first image corresponding to the first seat, and obtain, via a safety belt detection unit corresponding to the first seat, the safety belt wearing information corresponding to the first seat.

In some embodiments, the first seat information may indicate whether there is a first user on the first seat.

The pressure value corresponding to the first seat may reflect whether the first seat is seated and a weight of the first user sitting on the first seat. When the pressure value corresponding to the first seat is greater than or equal to a first pressure value, the first seat information may indicate that there is the first user on the first seat. When the pressure value corresponding to the first seat is less than the first pressure value, the first seat information may indicate that there is no user on the first seat, or impact of adjustment of the second seat on the existing first user (for example, a young child sitting on the first seat) may not be considered. The first pressure value represents a preset pressure value, for example, 35 kg or 40 kg (that is, 40 kg on the seat safety belt detection standard GB/T 24551 is used as a standard). In other words, when the pressure value corresponding to the first seat is greater than or equal to the first pressure value, impact of adjustment of the second seat on the first user may be considered.

Content included in the first image may reflect whether the first seat is seated and a volume of space occupied by the first user taking a ride on the first seat.

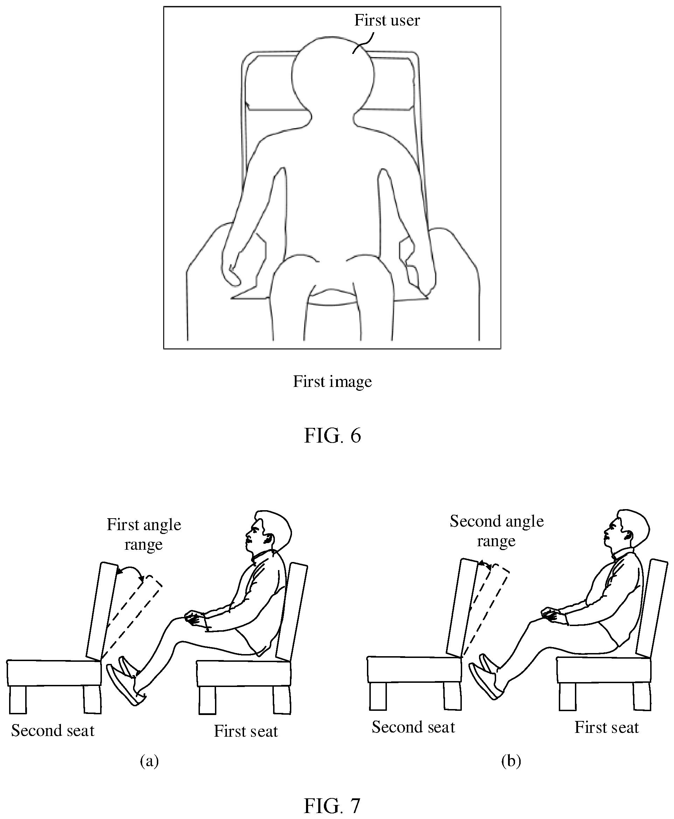

As shown in FIG. 6, when there is an image of the first user in the first image, the first image may indicate that there is the first user on the first seat. The first image may further include an image of the first seat, so that it is more convenient to determine whether there is the first user on the first seat.

The safety belt wearing information corresponding to the first seat may reflect whether the first seat is seated. When the safety belt wearing information corresponding to the first seat indicates that a safety belt of the first seat is worn, the first seat information may indicate that there is the first user on the first seat. When the safety belt wearing information corresponding to the first seat indicates that a safety belt of the first seat is not worn, the first seat information may indicate that there is no user on the first seat.

In some possible application scenarios, the transportation means may determine, based on any type of the foregoing first seat information, whether there is the first user on the first seat. In some other possible application scenarios, the transportation means may further determine, based on any two or all types of the first seat information, whether there is the first user on the first seat.

For example, the transportation means may first determine whether the pressure value corresponding to the first seat is greater than or equal to the first pressure value. When the pressure value corresponding to the first seat is greater than or equal to the first pressure value, it is further determined whether the safety belt wearing information corresponding to the first seat indicates that the safety belt of the first seat is worn. If the safety belt wearing information indicates that the safety belt of the first seat is worn, the transportation means may determine that there is the first user on the first seat, and the first seat information also indicates that there is the first user on the first seat. In this way, whether there is the first user may be determined from two aspects: pressure value and wearing of a safety belt, so that accuracy of determining the first user can be improved.

S502: When the first seat information indicates that there is the first user on the first seat, the transportation means obtains an adjustment limitation condition corresponding to an adjustable item of a second seat.

The adjustable item includes a backrest angle of the second seat, a position of the second seat, and the like. The adjustment limitation condition is used to limit an adjustment range of the adjustable item. In other words, the adjustment limitation condition may include an angle range for limiting adjustment of the backrest angle of the second seat, and may further include a distance range for limiting adjustment of the position of the second seat.

In some embodiments, when the adjustment limitation condition includes the angle range for limiting adjustment of the backrest angle of the second seat, the adjustment limitation condition may alternatively be a weight of the first user, an occupied space volume, or the like. Different weights and/or occupied space volumes correspond to different limitation angle ranges. Further, the transportation means may obtain different limitation angle ranges in the adjustment limitation condition in different cases.

For example, when the pressure value corresponding to the first seat is greater than or equal to the first pressure value and less than a second pressure value, the transportation means obtains a first angle range corresponding to the backrest angle of the second seat. When the pressure value corresponding to the first seat is greater than or equal to the second pressure value and less than a third pressure value, the transportation means obtains a second angle range corresponding to the backrest angle of the second seat.

When the pressure value corresponding to the first seat is greater than or equal to the first pressure value and less than the second pressure value, it indicates that the first user on the first seat has a small weight and may be a thin person. In this case, a limitation on the backrest angle of the second seat may be loosened, and therefore, the first angle range is large. As shown in (a) in FIG. 7, a position of a seat backrest shown by a solid line represents an initial position of the backrest angle, and a position of the seat backrest shown by a dashed line represents an adjusted position of the backrest angle. When the pressure value corresponding to the first seat is greater than or equal to the second pressure value and less than the third pressure value, it indicates that the first user on the first seat has a large weight, and may be a fat person or a little fat person. In this case, a degree of limitation on the backrest angle of the second seat needs to be stricter, and therefore, the second angle range is smaller than the first angle range, as shown in (b) in FIG. 7. The first pressure value, the second pressure value, the third pressure value, and the like all represent preset pressure values. The second pressure value may be 60 kg, 65 kg, 70 kg, or the like. The third pressure value may be 80 kg, 85 kg, or the like.

It can be learned that when the pressure value corresponding to the first seat is in different ranges, the transportation means has different limitations on the backrest angle of the second seat. In this way, physical conditions such as a weight and fatness of a rear-row user can be fully considered, and impact on the rear-row user when a front-row user adjusts a seat is reduced.

In some possible application scenarios, when the pressure value corresponding to the first seat is greater than or equal to the third pressure value, it may indicate that the first user on the first seat has an especially large weight. In this case, to ensure that adjustment of the second seat does not affect the first user on the first seat, the second user on the second seat may be prohibited from adjusting the backrest angle of the second seat.

For another example, the transportation means may further obtain user information of the first user in the first image corresponding to the first seat, and determine, based on the user information, a volume of space occupied by the first user. When the volume of the space occupied by the first user is greater than or equal to a first preset value and less than a second preset value, the transportation means obtains a third angle range corresponding to the backrest angle of the second seat. When the volume of the space occupied by the first user is greater than or equal to the second preset value and less than a third preset value, the transportation means obtains a fourth angle range corresponding to the backrest angle of the second seat.

When the volume of the space occupied by the first user is greater than or equal to the first preset value and less than the second preset value, it indicates that the first user has a small volume, and may be a thin person. In this case, a limitation on the backrest angle of the second seat may be loosened, so that the third angle range is large. When the volume of the space occupied by the first user is greater than or equal to the second preset value and less than the third preset value, it indicates that the first user has a large volume, and may be a fat person or a little fat person. In this case, a limitation on the backrest angle of the second seat needs to be stricter, so that the fourth angle range is smaller than the third angle range.

In some possible application scenarios, the third angle range may be the same as the first angle range, and the fourth angle range may be the same as the second angle range. This is not specifically limited in embodiments of this application.

It can be learned that, when the volume of the space occupied by the first user is in different ranges, the transportation means has different limitations on the backrest angle of the second seat. In this way, physical conditions such as a volume and fatness of a rear-row user can be fully considered, and impact on the rear-row user when a front-row user adjusts a seat is reduced.

In some possible application scenarios, when the volume of the space occupied by the first user is greater than or equal to the third preset value, it may indicate that the first user has a particularly large volume. In this case, to ensure that adjustment of the second seat does not affect the first user, the second user on the second seat may be prohibited from adjusting the backrest angle of the second seat.

In some other embodiments, when the adjustment limitation condition includes the distance range for limiting adjustment of the position of the second seat, the adjustment limitation condition may alternatively be a weight of the first user, an occupied space volume, or the like, and a corresponding limitation distance range is configured. Different weights and/or occupied space volumes correspond to different limitation distance ranges. Further, the transportation means may obtain different limitation distance ranges in the adjustment limitation condition in different cases.

For example, when the pressure value corresponding to the first seat is greater than or equal to the first pressure value and less than a fourth pressure value, the transportation means obtains a first distance range corresponding to the position of the second seat. When the pressure value corresponding to the first seat is greater than or equal to the fourth pressure value and less than a fifth pressure value, the transportation means obtains a second distance range corresponding to the position of the second seat.

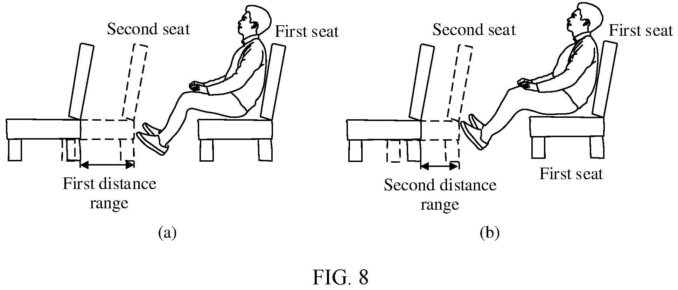

When the pressure value corresponding to the first seat is greater than or equal to the first pressure value and less than the fourth pressure value, it indicates that the first user on the first seat has a small weight and may be a thin person. In this case, a limitation on the position of the second seat may be loosened, and therefore, the first distance range is large. As shown in (a) in FIG. 8, a position of the seat shown by a solid line represents an initial position of the seat, and a position of the seat shown by a dashed line represents an adjusted position of the seat. When the pressure value corresponding to the first seat is greater than or equal to the fourth pressure value and less than the fifth pressure value, it indicates that the first user on the first seat has a large weight, and may be a fat person or a little fat person. In this case, a limitation on a position of the second seat needs to be stricter, and therefore, the second distance range is smaller than the first distance range, as shown in (b) in FIG. 8.

In some possible application scenarios, the fourth pressure value may be the same as the second pressure value, and the fifth pressure value may also be the same as the third pressure value. This is not specifically limited in embodiments of this application.

It can be learned that when the pressure value corresponding to the first seat is in different ranges, the transportation means has different limitations on the position of the second seat. In this way, physical conditions such as a weight and fatness of a rear-row user can be fully considered, and impact on the rear-row user when a front-row user adjusts a seat is reduced.

In some possible application scenarios, when the pressure value corresponding to the first seat is greater than or equal to the fifth pressure value, it may indicate that the first user on the first seat has an especially large weight. In this case, to ensure that adjustment of the second seat does not affect the first user on the first seat, the second user on the second seat may be prohibited from adjusting the position of the second seat.

For another example, the transportation means may further obtain user information of the first user in the first image, and determine, based on the user information, a volume of space occupied by the first user. When the volume of the space occupied by the first user is greater than or equal to the first preset value and less than a fourth preset value, a third distance range corresponding to the position of the second seat is obtained. When the volume of the space occupied by the first user is greater than or equal to the fourth preset value and less than a fifth preset value, a fourth distance range corresponding to the position of the second seat is obtained.

When the volume of the space occupied by the first user is greater than or equal to the first preset value and less than the fourth preset value, it indicates that the first user has a small volume, and may be a thin person. In this case, a limitation on the position of the second seat may be loosened, so that the third distance range is large. When the volume of the space occupied by the first user is greater than or equal to the fourth preset value and less than the fifth preset value, it indicates that the first user has a large volume, and may be a fat person or a little fat person. In this case, a limitation on the position of the second seat needs to be stricter, and therefore, the fourth distance range is smaller than the third distance range.

In some possible application scenarios, the fourth preset value may be the same as the second preset value, and the fifth preset value may also be the same as the third preset value. In addition, the third distance range may be the same as the first distance range, and the fourth distance range may be the same as the second distance range. This is not specifically limited in embodiments of this application.

It can be learned that, when the volume of the space occupied by the first user is in different ranges, the transportation means has different limitations on the position of the second seat. In this way, physical conditions such as a volume and fatness of a rear-row user can be fully considered, and impact on the rear-row user when a front-row user adjusts a seat is reduced.

In some possible application scenarios, when the volume of the space occupied by the first user is greater than or equal to the fifth preset value, it may indicate that the first user has a particularly large volume. In this case, to ensure that adjustment of the second seat does not affect the first user, the second user on the second seat may be prohibited from adjusting the position of the second seat.

In addition, it may be understood that the first pressure value, the second pressure value, the third pressure value, the fourth pressure value, the fifth pressure value, the first preset value, the second preset value, the third preset value, the fourth preset value, the fifth preset value, and the like in this embodiment of this application are all preset, and a specific value is determined based on an actual situation of the transportation means and/or a user taking a ride. A specific value of the preset value is not specifically limited in embodiments of this application.

S503: The transportation means limits, based on the adjustment limitation condition corresponding to the adjustable item, an adjustment operation of the second user when the second user adjusts the adjustable item of the second seat.

That the transportation means limits the adjustment operation of the second user indicates that the backrest angle of the second seat is limited not to exceed a corresponding angle range, and/or the position of the second seat is limited not to exceed a distance range corresponding to the second seat.

For example, if the backrest angle of the second seat exceeds an angle range corresponding to the backrest angle of the second seat after the second user adjusts the backrest angle of the second seat, the transportation means controls the backrest angle of the second seat to be adjusted to an angle corresponding to a maximum value of the angle range. For example, an angle range corresponding to the backrest angle of the second seat is 90° to 100°. If the backrest angle of the second seat changes from 90° to 105° or from 95° to 105° after being adjusted by the second user, the backrest angle exceeds a limitation of the angle range. In this case, the transportation means controls the backrest angle of the second seat to be finally 100°.

For another example, if the position of the second seat exceeds a distance range corresponding to the position of the second seat after the second user adjusts the position of the second seat, the transportation means controls the position of the second seat to be adjusted to a position corresponding to a maximum value of the distance range. For example, a distance range corresponding to the position of the second seat is 0 m to 0.2 m (a range that can be adjusted backward from the initial position). If the position of the second seat changes from a position of 0 m (namely, the initial position) to a position of 0.3 m, or changes from a position of 0.1 m to a position of 0.3 m after being adjusted by the second user, the position of the seat exceeds a limitation of a corresponding distance range. In this case, the transportation means controls the position of the second seat to be finally at a position of 0.2 m.

It can be learned from the foregoing content that, according to the seat adjustment method provided in this embodiment of this application, adjustment of the front-row seat may be limited based on a status of the first user sitting on the rear-row seat, to reduce impact of the adjustment of the front-row seat on the first user on the rear-row seat. When comfort of the second user on the front-row seat is ensured, riding experience of the first user on the rear-row seat may also be considered.

In some embodiments, when the first seat information indicates that there is no user sitting on the first seat, it indicates that the adjustment of the adjustable item of the second seat may not affect another user. In this case, if the second user adjusts the adjustable item of the second seat, the transportation means may control, based on the adjustment operation of the second user, the adjustable item to be adjusted to a corresponding angle or position. In other words, the transportation means does not limit the adjustment operation of the second user on the second seat, and therefore, comfort of the second user taking the transportation means is improved, and riding experience of the second user is ensured.

It may be understood that, in this embodiment of this application, both the backrest angle and the position of the seat have respective initial positions. When adjusting the adjustable item of the seat, the user may adjust the backrest of the seat from the initial position, or may adjust the backrest of the seat from a current position. For example, the initial position of the backrest of the seat may be a position at which the backrest may be at an angle of 90° to a seat cushion, and the backrest angle of the seat may be an angle between the backrest and the seat cushion. In addition, when adjusting the adjustable item of the seat, the user may adjust the seat from the initial position, or may adjust the seat from a current position.

For example, in this embodiment of this application, the angle range for limiting the adjustment of the backrest angle is an angle range for adjusting from the initial position of the backrest of the seat shown in (a) in FIG. 7 to a position where the backrest and the seat cushion are at an angle greater than 90°, and the distance range for limiting the adjustment of the position of the seat is a distance range for adjusting from the initial position of the position of the seat shown in (a) in FIG. 8 to a rear-row seat.

In some embodiments, the transportation means may further first determine a limitation strategy for the adjustable item of the second seat with reference to the pressure value and the safety belt wearing information that correspond to the first seat. Then, a weight and a volume of the first user are specifically determined based on the pressure value, the first image, and/or the like of the first seat, to obtain an adjustment limitation condition in a corresponding limitation strategy, for example, a limitation angle range and/or a limitation distance range.

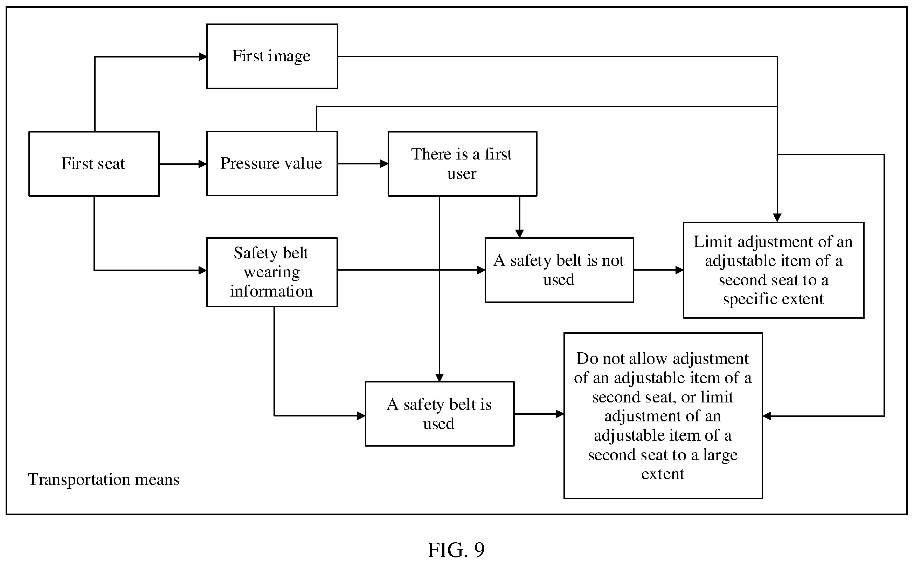

For example, as shown in FIG. 9, the transportation means determines, based on the pressure value corresponding to the first seat, that there is the first user on the first seat, and then the transportation means continues to determine, based on the safety belt wearing information, whether the safety belt of the first seat is used. If the safety belt is not used, the limitation strategy determined by the transportation means is limiting adjustment of an adjustable item of a second seat to a specific extent. If the safety belt is used, the limitation strategy determined by the transportation means is not allowing adjustment of an adjustable item of a second seat, or limiting adjustment of an adjustable item of a second seat to a large extent.

Then, the transportation means further determines, based on the pressure value and/or the first image corresponding to the first seat, limitation angle ranges in different limitation strategies, for example, the first angle range and the second angle range in the foregoing embodiment, and determines limitation distance ranges in different limitation strategies, for example, the first distance range and the second distance range in the foregoing embodiment.

In some embodiments, in addition to determining whether there is a user on the seat, the safety belt wearing information may further restrict the user to use the safety belt more actively. This is because in some possible application scenarios, if there is a user actually on the rear-row seat, but the user does not use a safety belt, the transportation means may determine that there is no user on the rear-row seat, thereby not limiting adjustment of the front-row seat. If the rear-row user wants to avoid this case, the rear-row user actively uses the safety belt, so that the transportation means determines that there is a user on the rear-row seat, and limits adjustment of the front-row seat. In this way, not only the rear-row user can take a ride more comfortably, but also safety of travel can be improved.

In some possible application scenarios, each time the transportation means is ignited or started, the transportation means may trigger an operation of obtaining the first seat information, and determine, based on the first seat information, whether there is the first user on the first seat and whether the adjustment limitation condition corresponding to the adjustable item of the second seat is obtained.

When obtaining the adjustment limitation condition of the second seat, the transportation means may deliver the adjustment limitation condition to a seat adjustment unit of the second seat. The seat adjustment unit may determine, based on a riding status of the second user on the second seat, whether to limit an adjustment operation of the adjustable item of the second seat or whether to limit an adjustment operation of the second user.

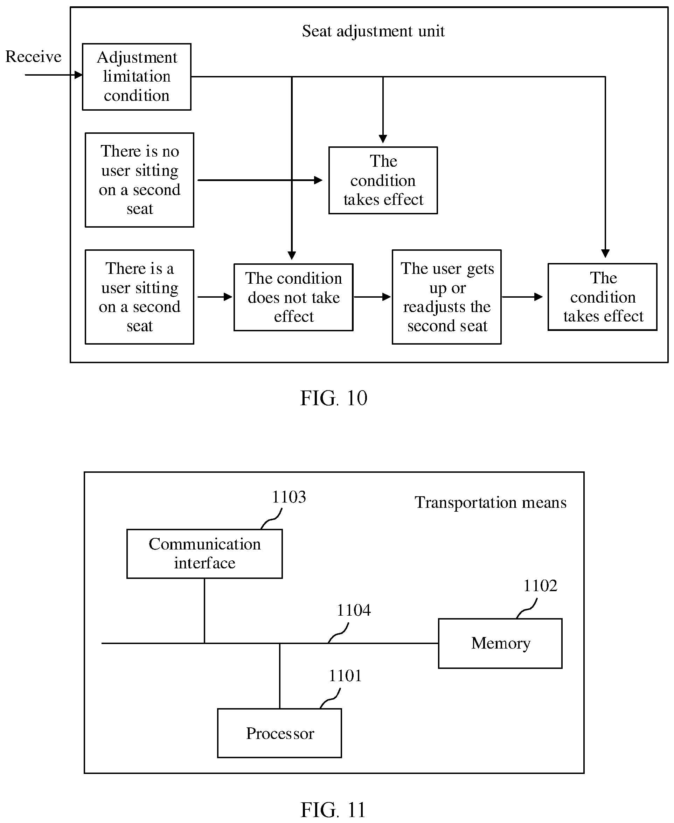

For example, as shown in FIG. 10, after the seat adjustment unit receives the adjustment limitation condition, if there is no user sitting on the second seat, the adjustment limitation condition takes effect immediately. Then, if the user adjusts the adjustable item of the second seat, the seat adjustment unit performs limitation based on the adjustment limitation condition.

After the seat adjustment unit receives the adjustment limitation condition, if there is a user sitting on the second seat, the adjustment limitation condition does not take effect, and the seat adjustment unit does not forcibly re-adjust, to meet a requirement of the adjustment limitation condition, the adjustable item that is of the second seat and that has been adjusted. This avoids negative impact on the user sitting on the second seat. Then, if the user sitting on the second seat gets up or the second seat is readjusted, the adjustment limitation condition takes effect, and the seat adjustment unit performs limitation based on the adjustment limitation condition.

In some other possible application scenarios, the transportation means may further obtain the first seat information in real time, to determine whether there is the first user on the first seat in a timely manner, and obtain the adjustment limitation condition corresponding to the adjustable item of the second seat in a timely manner, so that the adjustment of the adjustable item of the second seat is more flexibly limited in a timely manner based on a riding status of the first user on the first seat, the weight of the first user, the volume of the first user, and the like.

For example, the transportation means obtains the first seat information in real time. If the first seat information obtained for the first time indicates that there is no user on the first seat, the transportation means may not limit the adjustment of the second seat. Then, if there is the first user sitting on the first seat, the transportation means determines, based on the first seat information obtained at this time, that there is the first user on the first seat, and then starts to limit the adjustment of the second seat according to the method in the foregoing embodiment. If the first user sitting on the first seat changes, because weights and volumes of users may be different, the transportation means may further change the limitation angle range, the limitation distance range, and/or the like of the second seat based on the pressure value, the first image, and the like in the first seat information.

It may be understood that, in this embodiment of this application, processing such as collection, storage, use, processing, transmission, provision, and disclosure of the user information complies with related laws and regulations, and does not violate public order and good morals. For example, in this embodiment of this application, obtaining the user information from the first image, determining, based on the user information, the volume of the space occupied by the user, and the like are all performed with user authorization.

In some solutions, a plurality of embodiments of this application may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on the execution sequence between the steps. The steps may alternatively be performed in another execution sequence. It is not intended to indicate that the execution sequence is the only sequence in which these operations can be performed. A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the transportation means includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions with reference to embodiments for each particular application, but it should not be considered that the implementation goes beyond the scope of this application.

In embodiments of this application, the transportation means may be divided into functional modules based on the foregoing method examples. For example, each functional module may be obtained through division based on each corresponding function, or two or more than two functions may be integrated into one processing module. The integrated module may be implemented in a form of hardware. It should be noted that, in embodiments of this application, module division is an example, and is merely a logical function division. In actual implementation, another division manner may be used.

An embodiment of this application further provides a transportation means. As shown in FIG. 11, the transportation means may include one or more processors 1101, a memory 1102, and a communication interface 1103.

The memory 1102 and the communication interface 1103 are coupled to the processor 1101. For example, the memory 1102, the communication interface 1103, and the processor 1101 may be coupled together through the bus 1104.

The communication interface 1103 is used to transmit data to another device. The memory 1102 stores computer program code. The computer program code includes computer instructions. When the computer instructions are executed by the processor 1101, the transportation means is enabled to perform the seat adjustment method in embodiments of this application.

The processor 1101 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor.

The bus 1104 may be a peripheral component interconnect (peripheral component interconnect, PCI) bus, an extended industry standard architecture (extended industry standard architecture, EISA) bus, or the like. The bus 1104 may be classified into an address bus, a data bus, a control bus, and the like. For ease of representation, only one bold line is used to represent the bus in FIG. 11, but this does not mean that there is only one bus or only one type of bus.

An embodiment of this application further provides a computer-readable storage medium. The computer-readable storage medium stores computer program code. When the processor executes the computer program code, the transportation means performs related method steps in the foregoing method embodiments.

An embodiment of this application further provides a computer program product. When the computer program product runs on a transportation means, the transportation means is enabled to perform related method steps in the foregoing method embodiments.

The transportation means, the computer storage medium, or the computer program product provided in this application is configured to perform the corresponding method provided above. Therefore, for beneficial effect that can be achieved by the transportation means, the computer storage medium, or the computer program product, refer to the beneficial effect in the corresponding methods provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A seat adjustment method, applied to a transportation means, wherein the transportation means comprises at least a first seat and a second seat that face a same direction, the second seat is located in a row in front of the first seat, the second seat corresponds to at least one adjustable item, and the method comprises:
obtaining first seat information of the first seat;
when the first seat information indicates that there is a first user on the first seat, obtaining an adjustment limitation condition corresponding to the adjustable item of the second seat, wherein the adjustment limitation condition is used to limit an adjustment range of the adjustable item; and
limiting, based on the adjustment limitation condition corresponding to the adjustable item, an adjustment operation of a second user when the second user adjusts the adjustable item of the second seat.

2. The method according to claim 1, wherein the first seat information comprises a pressure value corresponding to the first seat; and when the pressure value corresponding to the first seat is greater than or equal to a first pressure value, the first seat information indicates that there is the first user on the first seat; or when the pressure value corresponding to the first seat is less than the first pressure value, the first seat information indicates that there is no user on the first seat.

3. The method according to claim 2, wherein the adjustable item comprises a backrest angle of the second seat, the adjustment limitation condition comprises an angle range for limiting adjustment of the backrest angle of the second seat, and the obtaining the adjustment limitation condition corresponding to the adjustable item of the second seat comprises:
when the pressure value corresponding to the first seat is greater than or equal to the first pressure value and less than a second pressure value, obtaining a first angle range corresponding to the backrest angle of the second seat; and
when the pressure value corresponding to the first seat is greater than or equal to the second pressure value and less than a third pressure value, obtaining a second angle range corresponding to the backrest angle of the second seat, wherein the first angle range is greater than the second angle range.

4. The method according to claim 2 or 3, wherein the adjustable item comprises a position of the second seat, the adjustment limitation condition comprises a distance range for limiting adjustment of the position of the second seat, and the obtaining the adjustment limitation condition corresponding to the adjustable item of the second seat comprises:
when the pressure value corresponding to the first seat is greater than or equal to the first pressure value and less than a fourth pressure value, obtaining a first distance range corresponding to the position of the second seat; and
when the pressure value corresponding to the first seat is greater than or equal to the fourth pressure value and less than a fifth pressure value, obtaining a second distance range corresponding to the position of the second seat, wherein the first distance range is greater than the second distance range.

5. The method according to claim 1, wherein the first seat information comprises a first image corresponding to the first seat, and the first image indicates that there is the first user on the first seat.

6. The method according to claim 5, wherein the adjustable item comprises a backrest angle of the second seat, the adjustment limitation condition comprises an angle range for limiting adjustment of the backrest angle of the second seat, and the obtaining the adjustment display condition corresponding to the adjustable item of the second seat comprises:
obtaining user information of the first user in the first image, and determining, based on the user information, a volume of space occupied by the first user;
when the volume of the space occupied by the first user is greater than or equal to a first preset value and less than a second preset value, obtaining a third angle range corresponding to the backrest angle of the second seat; and
when the volume of the space occupied by the first user is greater than or equal to the second preset value and less than a third preset value, obtaining a fourth angle range corresponding to the backrest angle of the second seat, wherein the third angle range is greater than the fourth angle range.

7. The method according to claim 5 or 6, wherein the adjustable item comprises a position of the second seat, the adjustment limitation condition comprises a distance range for limiting adjustment of the position of the second seat, and the obtaining the adjustment limitation condition corresponding to the adjustable item of the second seat comprises:
obtaining the user information of the first user in the first image, and determining, based on the user information, the volume of the space occupied by the first user;
when the volume of the space occupied by the first user is greater than or equal to the first preset value and less than a fourth preset value, obtaining a third distance range corresponding to the position of the second seat; and
when the volume of the space occupied by the first user is greater than or equal to the fourth preset value and less than a fifth preset value, obtaining a fourth distance range corresponding to the position of the second seat, wherein the third distance range is greater than the fourth distance range.

8. The method according to claim 3 or 6, wherein the limiting, based on the adjustment limitation condition corresponding to the adjustable item, the adjustment operation of the second user when the second user adjusts the adjustable item of the second seat comprises:
if the backrest angle of the second seat exceeds an angle range corresponding to the backrest angle of the second seat after the second user adjusts the backrest angle of the second seat, controlling the backrest angle of the second seat to be adjusted to an angle corresponding to a maximum value of the angle range.

9. The method according to claim 4 or 7, wherein the limiting, based on the adjustment limitation condition corresponding to the adjustable item, the adjustment operation of the second user when the second user adjusts the adjustable item of the second seat comprises:
if the position of the second seat exceeds a distance range corresponding to the position of the second seat after the second user adjusts the position of the second seat, controlling the position of the second seat to be adjusted to a position corresponding to a maximum value of the distance range.

10. The method according to claim 1, wherein the first seat information comprises safety belt wearing information corresponding to the first seat; and when the safety belt wearing information indicates that a safety belt of the first seat is worn, the first seat information indicates that there is the first user on the first seat; or when the safety belt wearing information indicates that the safety belt of the first seat is not worn, the first seat information indicates that there is no user on the first seat.

11. The method according to any one of claims 1 to 10, wherein the method further comprises:
when the first seat information indicates that there is no user sitting on the first seat, if the second user adjusts the adjustable item of the second seat, controlling, based on the adjustment operation of the second user, the adjustable item to be adjusted to a corresponding angle or position.

12. A transportation means, comprising at least a first seat and a second seat that face a same direction, and a control unit separately connected to the first seat and the second seat, wherein the second seat is located in a row in front of the first seat, and the second seat corresponds to at least one adjustable item; and the control unit is configured to:
obtain first seat information of the first seat;
when the first seat information indicates that there is a first user on the first seat, obtain an adjustment limitation condition corresponding to the adjustable item of the second seat, wherein the adjustment limitation condition is used to limit an adjustment range of the adjustable item; and
limit, based on the adjustment limitation condition corresponding to the adjustable item, an adjustment operation of a second user when the second user adjusts the adjustable item of the second seat.

13. The transportation means according to claim 12, wherein the first seat comprises a pressure sensor, the pressure sensor is connected to the control unit, and the first seat information comprises a pressure value corresponding to the first seat, wherein
the pressure sensor is configured to: obtain the pressure value corresponding to the first seat, and send the pressure value corresponding to the first seat to the control unit; and
the control unit is further configured to: when the pressure value corresponding to the first seat is greater than or equal to a first pressure value, determine that the first seat information indicates that there is the first user on the first seat; or when the pressure value corresponding to the first seat is less than the first pressure value, determine that the first seat information indicates that there is no user on the first seat.

14. The transportation means according to claim 13, wherein the adjustable item comprises a backrest angle of the second seat, the adjustment limitation condition comprises an angle range for limiting adjustment of the backrest angle of the second seat, and the control unit is further configured to:
when the pressure value corresponding to the first seat is greater than or equal to the first pressure value and less than a second pressure value, obtain a first angle range corresponding to the backrest angle of the second seat; and
when the pressure value corresponding to the first seat is greater than or equal to the second pressure value and less than a third pressure value, obtain a second angle range corresponding to the backrest angle of the second seat, wherein the first angle range is greater than the second angle range.

15. The transportation means according to claim 13 or 14, wherein the adjustable item comprises a position of the second seat, the adjustment limitation condition comprises a distance range for limiting adjustment of the position of the second seat, and the control unit is further configured to:
when the pressure value corresponding to the first seat is greater than or equal to the first pressure value and less than a fourth pressure value, obtain a first distance range corresponding to the position of the second seat; and
when the pressure value corresponding to the first seat is greater than or equal to the fourth pressure value and less than a fifth pressure value, obtain a second distance range corresponding to the position of the second seat, wherein the first distance range is greater than the second distance range.

16. The transportation means according to claim 12, wherein the transportation means further comprises at least one camera, and the first seat information comprises a first image corresponding to the first seat;
the camera is configured to: obtain the first image corresponding to the first seat, and send the first image to the control unit; and
the control unit is further configured to determine, based on the first image, the first user existing on the first seat.

17. The transportation means according to claim 16, wherein the adjustable item comprises a backrest angle of the second seat, the adjustment limitation condition comprises an angle range for limiting adjustment of the backrest angle of the second seat, and the control unit is further configured to:
obtain user information of the first user in the first image, and determine, based on the user information, a volume of space occupied by the first user;
when the volume of the space occupied by the first user is greater than or equal to a first preset value and less than a second preset value, obtain a third angle range corresponding to the backrest angle of the second seat; and
when the volume of the space occupied by the first user is greater than or equal to the second preset value and less than a third preset value, obtain a fourth angle range corresponding to the backrest angle of the second seat, wherein the third angle range is greater than the fourth angle range.

18. The transportation means according to claim 16 or 17, wherein the adjustable item comprises a position of the second seat, the adjustment limitation condition comprises a distance range for limiting adjustment of the position of the second seat, and the control unit is further configured to:
obtain the user information of the first user in the first image, and determine, based on the user information, the volume of the space occupied by the first user;
when the volume of the space occupied by the first user is greater than or equal to the first preset value and less than a fourth preset value, obtain a third distance range corresponding to the position of the second seat; and
when the volume of the space occupied by the first user is greater than or equal to the fourth preset value and less than a fifth preset value, obtain a fourth distance range corresponding to the position of the second seat, wherein the third distance range is greater than the fourth distance range.

19. The transportation means according to claim 14 or 17, wherein
the control unit is further configured to: if the backrest angle of the second seat exceeds an angle range corresponding to the backrest angle of the second seat after the second user adjusts the backrest angle of the second seat, control the backrest angle of the second seat to be adjusted to an angle corresponding to a maximum value of the angle range.

20. The transportation means according to claim 15 or 18, wherein
the control unit is further configured to: if the position of the second seat exceeds a distance range corresponding to the position of the second seat after the second user adjusts the position of the second seat, control the position of the second seat to be adjusted to a position corresponding to a maximum value of the distance range.

21. The transportation means according to claim 12, wherein the first seat comprises a safety belt detection unit, the safety belt detection unit is connected to the control unit, and the first seat information comprises safety belt wearing information corresponding to the first seat;
the safety belt detection unit is configured to: obtain the safety belt wearing information corresponding to the first seat, and send the safety belt wearing information to the control unit; and
the control unit is further configured to: when the safety belt wearing information indicates that a safety belt of the first seat is worn, determine that the first seat information indicates that there is the first user on the first seat; or when the safety belt wearing information indicates that the safety belt of the first seat is not worn, determine that the first seat information indicates that there is no user sitting on the first seat.

22. The transportation means according to any one of claims 12 to 21, wherein the control unit is further configured to: when the first seat information indicates that there is no user sitting on the first seat, if the second user adjusts the adjustable item of the second seat, control, based on the adjustment operation of the second user, the adjustable item to be adjusted to a corresponding angle or position.
